# EUROPÄISCHE PATENTSCHRIFT

(11) **EP 0 972 423 B1**
(45) Veröffentlichungstag und Bekanntmachung des Hinweises auf die Patenterteilung: **24.09.2003**
(21) Anmeldenummer: 98923992.6
(22) Anmeldetag: 11.03.1998
(51) Int. Cl.: H04Q 11/04

(54) **VERFAHREN UND NETZKOMPONENTE EINES KOMMUNIKATIONSNETZES ZUR VERMITTLUNG VON NIEDERBITRATIGEN VERBINDUNGEN ZWISCHEN EINGANGSBAUGRUPPEN UND AUSGANGSBAUGRUPPEN**
METHOD AND NETWORK COMPONENT OF A COMMUNICATION NETWORK FOR SWITCHING LOW BIT RATE CONNECTIONS BETWEEN INPUT MODULES AND OUTPUT MODULES
PROCEDE ET COMPOSANT D'UN RESEAU DE COMMUNICATION PERMETTANT DE COMMUTER DES LIAISONS A FAIBLE DEBIT BINAIRE ENTRE DES MODULES D'ENTREE ET DES MODULES DE SORTIE

(30) Priorität: 24.03.1997 DE 19712259; 23.12.1997 DE 19757598
(43) Veröffentlichungstag der Anmeldung: 19.01.2000
(73) Patentinhaber: SIEMENS AKTIENGESELLSCHAFT, 80333 München (DE)
(72) Erfinder: HARTH, Arno, D-82515 Wolfratshausen (DE); TIPPMANN-KRAYER, Petra, D-85356 Freising (DE); HOLZNER, Peter, D-82110 Germering (DE); KORTE, Werner, D-80538 München (DE); SCHRODI, Karl, D-82538 Geretsried (DE); KLUG, Andreas, 83607 Holzkirchen (DE)
(86) Internationale Anmeldenummer: DE9800726
(87) Internationale Veröffentlichungsnummer: WO98043399

(56) Entgegenhaltungen:
- WO-A-95/17789
- ZSEHONG TSAI ET AL: "PERFORMANCE ANALYSIS OF TWO ECHO CONTROL DESIGNS IN ATM NETWORKS" IEEE / ACM TRANSACTIONS ON NETWORKING, Bd. 2, Nr. 1, 1. Februar 1994, Seiten 30-39, XP000446088
- MCTIFFIN M J ET AL: "MOBILE ACCESS TO AN ATM NETWORK USING A CDMA AIR INTERFACE" IEEE JOURNAL ON SELECTED AREAS IN COMMUNICATIONS, Bd. 12, Nr. 5, 1. Juni 1994, Seiten 900-908, XP000464975

## Beschreibung

Die Erfindung betrifft ein Verfahren sowie eine entsprechende Netzkomponente zur Vermittlung von niederbitratigen Verbindungen zwischen Eingangsbaugruppen und Ausgangsbaugruppen der Netzkomponente eines Kommunikationsnetzes.

In Kommunikationsnetzen - vorzugsweise Mobilfunknetze oder Festnetze - werden die Informationen - z.B. Nutz- oder Signalisierungsinformationen bei Sprachübertragung - mit niedrigen Übertragungsraten mittels Zeitmultiplexverfahren TDM (Time Division Multiplex) über Leitungen zwischen Netzkomponenten transportiert. So können beispielsweise PCM30- oder PCM24-Anschlussleitungen eingesetzt werden. Für drahtgebundene Informationsübertragung - in Festnetzen, aber auch in Mobilfunknetzen, insbesondere der nächsten Generation - setzt sich zunehmend die ATM-Übertragung (Asynchronous Transfer Mode) mit ihren Vorteilen hinsichtlich Breitbandanwendungen durch. Nichtsdestotrotz bleibt die schmalbandige Informationsübertragung über niederbitratige Verbindungen - z.B. TDM-Verbindungen - eine wichtige Anwendung für die Mehrzahl der Mobil- oder Festnetzteilnehmer. Wenn daher in einer Netzkomponente die TDM-Multiplextechnik in ATM-Übertragungstechnik umzusetzen ist, tritt üblicherweise eine grosse Verzögerung auf - z.B. 48 msec bei 8 kbit/sec Sprachübertragung. Dies führt zu einer Verschlechterung der Sprachqualität.

Grundsätzlich gibt es zwar eine Umsetzung von TDM-Multiplextechnik in ATM-Übertragungstechnik, die nur zu kleinen Verzögerungen führt - z.B. durch Füllen der ATM-Zellen mit nur wenigen Bytes - jedoch hat dies eine unwirtschaftliche Nutzung der ATM-Bandbreite zur Folge. Aus diesem Grund ist es bislang ein Problem, Netzkomponenten eines Telekommunikationsnetzes so zu realisieren, dass sie intern den Verkehr über eine ATM-Vermittlungseinrichtung verteilen und zugleich an den externen Leitungen niederbitratigen TDM-Verkehr unterstützen.

Aus der internationalen Patentanmeldung WO 95/17789 ist ein ATM-Netz für schmalbandige Kommunikation bekannt. Es werden PCM-Signale - also Zeitmultiplex-Signale - in ATM-Zellen umgewandelt, um sie in einer ATM-Vermittlungseinrichtung, die eine geringe Anzahl von mehreren Vermittlungsstufen aufweist, durchzuschalten. Die PCM-Daten, die zu einem gemeinsamen Ziel zu vermitteln sind, werden in individuellen ATM-Zellen zusammengefasst.

Aufgabe der vorliegenden Erfindung ist es, ein Verfahren und eine Netzkomponente zur Vermittlung von niederbitratigen Verbindungen auf ATM-Basis anzugeben, durch das bzw. die gleichzeitig eine möglichst geringe Verzögerungszeit und ein hoher Nutzungsgrad der verfügbaren ATM-Bandbreite erzielbar ist.

Diese Aufgabe wird gemäß der Erfindung durch die Merkmale der, Patentansprüche 1 und 5 hinsichtlich des Verfahrens und durch die Merkmale des Patentansprüche 15 und 16 hinsichtlich der Netzkomponente gelöst. Weiterbildungen der Erfindung sind in den Unteransprüchen angegeben.

Die Erfindung geht aus von einer Vermittlung niederbitratiger Verbindungen zwischen Eingangsbaugruppen und Ausgangsbaugruppen einer Netzkomponente eines Kommunikationsnetzes. Dabei bilden die Eingangsbaugruppen und die Ausgangsbaugruppen eine erste Vermittlungsebene, sowie eine zwischen den Eingangsbaugruppen und den Ausgangsbaugruppen angeordnete ATM-Vermittlungseinrichtung eine zweite Vermittlungsebene. In der ersten Vermittlungsebene werden jeweils mehrere an der Eingangsbaugruppe anliegende und zu ein- und derselben Ausgangsbaugruppe zu übertragende niederbitratige Verbindungen von der Eingangsbaugruppe zu mindestens einer ATM-Verbindung zusammengefaßt. In der zweiten Vermittlungsebene erfolgt von der ATM-Vermittlungseinrichtung das Durchschalten der ATM-Verbindungen zur Übertragung von Informationen in ATM-Zellen. Anschliessend werden in der ersten Vermittlungsebene die durchgeschalteten ATM-Verbindungen einer oder mehrerer Eingangsbaugruppen in die niederbitratigen Verbindungen von der Ausgangsbaugruppe umgesetzt. Gemäß der Erfindung sind an die Eingangsbaugruppen und Ausgangsbaugruppen der ersten Vermittlungsebene jeweils externe ATM-Leitungen angeschlossen, über die Informationen mehrerer Verbindungen in einem Zeitmultiplexrahmen oder in ATM-Minipaketen strukturiert empfangen und gesendet werden.

Wenn man den Vermittlungsvorgang auf zwei Ebenen verteilt, werden mehrere Verbindungen gemeinsam in derselben ATM-Verbindung transportiert, sodaß sich eine geringe Verzögerung und eine gute Nutzung der ATM-Zellkapazität als Vorteile ergeben. Die kombinierte Vermittlung in zwei Vermittlungsebenen stellt eine besonders wirtschaftliche Lösung für mobilfunkspezifische Funktionen dar, die zugleich eine akzeptable Sprachqualität bei guter Ausnutzung der ATM-Bandbreite sichert. Die Erfindung der Mehrebenenvermittlung in einer ATM-Vermittlungseinrichtung und in davon getrennt angeordneten Eingangs- und Ausgangsbaugruppen bringt zwei gegensätzliche Aspekte in Einklang miteinander, nämlich die Verzögerung durch das Umsetzen von niederbitratigen Verbindungen in ATM-Technik zu minimieren und die Ausnutzung der ATM-Bandbreite zu erhöhen. Das Konzept der dezentralen Vermittlung in zwei Ebenen hat den Vorteil, daß die Vermittlungsvorgänge sowohl in den Eingangs- / Ausgangsbaugruppen als auch in der ATM-Vermittlungseinrichtung zumindest gleichartig oder auf einund dieselbe Art durchgeführt werden können. Weiterhin ist eine Anpassung der Software und Hardware in den Vermittlungsebenen durch eine Vermittlungssteuerung einfach und kostenarm möglich.

Gemäß einer Weiterbildung der Erfindung übernimmt eine gemeinsame Steuereinrichtung die Steuerung der Funktionen sowohl in der ersten als auch in der zweiten Vermittlungsebene. Besonders vorteilhaft ist es, wenn die ATM-Vermittlungseinrichtung nach Art eines dezentralen Vermittlungsprinzips betrieben wird, deren Steuereinrichtung Einstellungen in den Eingangsbaugruppen und den Ausgangsbaugruppen der ersten Vermittlungsebene veranlaßt. Die vereinheitlichte Steuerung der Vermittlungsebenen eins und zwei lässt sich mit geringem Hardware- und Softwareaufwand verwirklichen.

Gemäß weiterer vorteilhafter Ausgestaltungen der Erfindung gibt es verschiedene Methoden, die Schmalbandvermittlung in der ersten Vermittlungsebene durchzuführen zu können. Davon beruhen zwei Methoden auf dem Sammeln von Minipaketen in ATM-Zellen, wobei anhand einer Verbindungstabelle in der Eingangsbaugruppe bzw. Ausgangsbaugruppe ausgewählt wird, welche Minipakete in welche ATM-Zelle eingefügt bzw. welche Minipakete auf welche Verbindungen der Ausgangsbaugruppe verteilt werden. Drei Methoden folgen dem Prinzip, zuerst die Verbindungen - z.B. TDM-Verbindungen - an gemeinsamen Ausgängen zusammenzufassen und danach in die Paketverbindungen umzusetzen, was gleichbedeutend ist mit dem Eintragen der Informationen in die ATM-Zellen. Dieses Vorgehen hat den Vorteil, dass eine bis zu fünffach geringere Verzögerung und gleichzeitig eine mindestens doppelt so hohe Nutzung der verfügbaren Bandbreite gegenüber den beiden zuerst genannten Methoden erreichbar ist.

Die Vermittlung in zwei Ebenen bezieht sich vorzugsweise auf niederbitratige Verkehrsverbindungen, weil sie den Großteil des Verbindungsaufkommens ausmachen, kann jedoch auch auf Signalisierungsverbindungen und auf Betriebs- und Wartungsverbindungen (O&M, Operation & Maintenance) angewendet werden.

Im folgenden wird die Erfindung anhand von Ausführungsbeispielen bezugnehmend auf zeichnerische Darstellungen näher erläutert. Dabei zeigen
- FIG 1: das Blockschaltbild einer Netzkomponente zur Vermittlung von Verbindungen in zwei Vermittlungsebenen für eine Übertragungsrichtung der Verbindung,
- FIG 2, 3: Blockschaltbilder einer Eingangsbaugruppe und einer Ausgangsbaugruppe zur Vermittlung der Verbindungen in der ersten Vermittlungsebene basierend auf dem Sammeln von Minipaketen in ATM-Zellen,
- FIG 4, 5: Blockschaltbilder einer Eingangsbaugruppe und einer Ausgangsbaugruppe zur Vermittlung der Verbindungen in der ersten Vermittlungsebene basierend auf dem Zusammenfassen von TDM-Verbindungen in ATM-Zellen,
- FIG 6: die prinzipielle Arbeitsweise eines TDM-Vermittlungselements für die Zusammenfassung der TDM-Verbindungen, die zu derselben Ausgangsbaugruppe gehören, an gemeinsamen Ausgängen, und
- FIG 7-9: unterschiedliche Prinzipien zum Füllen der ATM-Zellen mit den Informationen der TDM-Verbindungen.

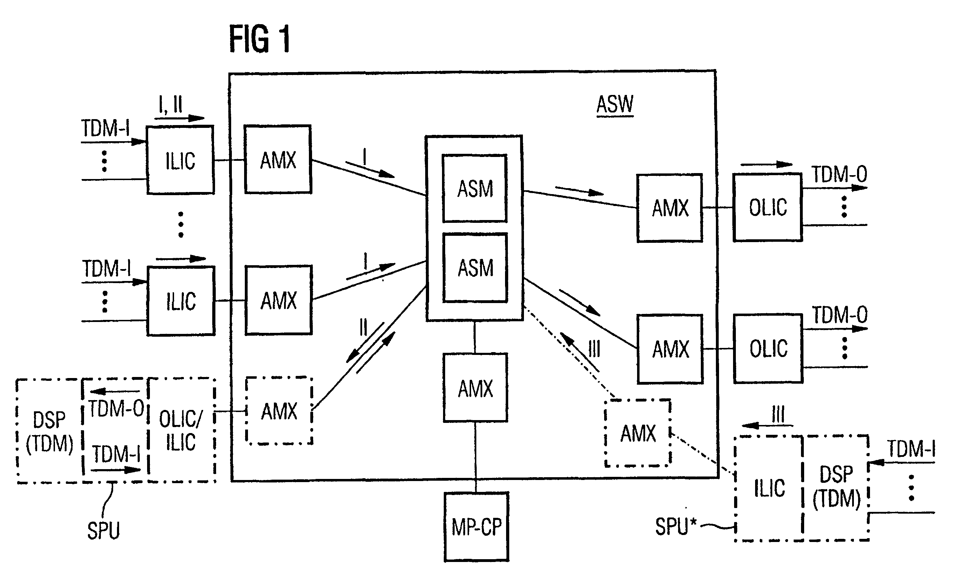

FIG 1 zeigt das Blockschaltbild einer Netzkomponente zur Vermittlung von Verbindungen gemäß der Erfindung in zwei Vermittlungsebenen für eine Übertragungsrichtung der Verbindung, die sich in den folgenden Figuren fortsetzt. Die Rückrichtung verläuft parallel zur dargestellten Übertragungsrichtung, sodaß für sie die folgenden Ausführungen entsprechend gelten. Die Netzkomponente ist im Beispiel eine Basisstationssteuerung BSC (Base Station Controller) oder eine Funksteuerung RNC (Radio Network Controller), die als Teil eines GSM-Mobilfunknetzes oder eines universellen Telekommunikationsnetzes (UMTS, Universal Mobile Telecommunication System) die Kontrolle und Steuerung von funktechnischen Aufgaben - insbesondere die Kontrolle von Basisstationen - übernimmt, oder eine Transkodiereinrichtung TRAU (Transcoding and Rate Adaption Unit), die bekanntlich im GSM-Mobilfunknetz pro Nutzkanal eine Anpassung der unterschiedlichen Übertragungsgeschwindigkeiten zwischen der Basisstationssteuerung BSC oder der Funksteuerung RNC und einer daran angeschalteten Vermittlungsstelle (MSC) sowie die Transcodierfunktion durchführt.

Dabei ist in FIG 1 die für die Netzkomponenten BSC, RNC, TRAU im wesentlichen identische funktionale Struktur zur Vermittlung der Verbindungen dargestellt, ohne daß im einzelnen auf die für die Erfindung unerheblichen, an sich bekannten Funktionen der jeweiligen Netzkomponente eingegangen wird. Eine Anwendung der erfindungsgemäßen Vermittlung, gekennzeichnet durch zwei Vermittlungsebenen, ist auch in der Mobilvermittlungsstelle möglich. Auch ist die Erfindung nicht auf Netzkomponenten eines Mobilfunknetzes beschränkt, sondern prinzipiell in jeder Netzkomponente, die festnetz- oder mobilfunkspezifische Funktionen wie beispielsweise Vermittlungs-, Kontroll-, Transkodieraufgaben usw. ausübt und dabei intern den Verkehr über ATM-Übertragungstechnik führt und an externen Leitungen niederbitratigen Verkehr, z.B. über TDM-Verbindungen, unterstützt.

Es ist mit der vorgestellten Erfindung möglich, ausgehend von einem ATM-Vermittlungsprinzip die Netzkomponenten mit den oben beispielhaft genannten Funktionalitäten zu realisieren. Die Netzkomponente BSC/RNC/TRAU weist zu diesem Zweck eine ATM-Vermittlungseinrichtung ASW auf, vorzugsweise bestehend aus mehreren Modulen ASM (ATM-Switching Module mit z.B. 5 Gbps) und mehreren ATM-Multiplexern AMX. Leitungsbaugruppen (Line Interface Circuits) und die Steuereinrichtung MP-CP sind über Multiplexer AMX mit der ATM-Vermittlungseinrichtung ASW verbunden. Die Leitungsbaugruppen nehmen die Funktion einer Eingangsbaugruppe ILIC oder einer Ausgangsbaugruppe OLIC wahr in Abhängigkeit davon, ob sie im Übertragungsweg eingangsseitig oder ausgangsseitig angeordnet ist. Grundsätzlich umfasst also jede Leitungsbaugruppe die Funktion einer Eingangsbaugruppe ILIC und einer Ausgangsbaugruppe OLIC. So werden mehrere eingangsseitige Verbindungen TDM-I von Eingangsbaugruppen ILIC jeweils zusammengefasst und über die Multiplexer AMX in der Richtung I im dargestellten Beispiel zur ATM-Vermittlungseinrichtung ASW weitervermittelt. Die Effizienz des Schmalbandmultiplexens auf den Eingangsbaugruppen ILIC kann dadurch erhöht werden, daß eine hohe Anzahl von Verbindungen TDM-I, beispielsweise acht Verbindungen, pro Baugruppe gewählt wird.

Die ATM-Vermittlungseinrichtung ASW bildet dabei die zweite der beiden Vermittlungsebenen gemäß der Erfindung, wobei sie nach dem dezentralen Vermittlungsprinzip arbeitet, bei dem die Verbindungswege durch Verbindungstabellen in den Eingangsbaugruppen ILIC und Ausgangsbaugruppen OLIC, die eingangsseitig bzw. ausgangsseitig mit der ATM-Vermittlungseinrichtung ASW verbunden sind, festgelegt werden. Die Eingangsbaugruppen ILIC und Ausgangsbaugruppen OLIC bilden die erste der beiden Vermittlungsebenen gemäß der Erfindung. Es werden in der ersten Vermittlungsebene jeweils mehrere an jeder der beiden dargestellten Eingangsbaugruppen ILIC anliegende und zu derselben Ausgangsbaugruppe OLIC (markiert durch dicke Pfeile) zu übertragende niederbitratige Verbindungen TDM-I von der jeweiligen Eingangsbaugruppe ILIC zu mindestens einer ATM-Verbindung zusammengefaßt. Dabei führen externe Leitungen - wie z.B. PCM-30 Leitungen - die Informationen der niederbitratigen Verbindungen TDM-I, die gemäß dem TDM-Multiplexverfahren in mehreren Zeitschlitzen eines TDM-Rahmens enthalten sind.

In der zweiten Vermittlungsebene erfolgt von der ATM-Vermittlungseinrichtung ASW das Durchschalten der ATM-Verbindungen zur Übertragung von Informationen in ATM-Zellen. Anschliessend wird in der ersten Vermittlungsebene die an die Ausgangsbaugruppe OLIC durchgeschalteten ATM-Verbindungen, die von einer oder mehreren Eingangsbaugruppen ILIC kommen, in niederbitratige Verbindungen TDM-O von der Ausgangsbaugruppe OLIC umgesetzt. Wenn man erfindungsgemäß den Vermittlungsvorgang auf zwei Ebenen verteilt, werden eine oder mehrere eingangsseitige TDM-Verbindungen einer Eingangsbaugruppe ILIC gemeinsam in derselben ATM-Verbindung transportiert und ausgangsseitig richtig der einen Ausgangsbaugruppe OLIC zugeordnet , sodaß sich eine geringe Verzögerung und eine gute Nutzung der ATM-Zellkapazität als Vorteile ergeben. Es können auch mehrere ATM-Verbindungen von unterschiedlichen Eingangsbaugruppen ILIC bei derselben Ausgangsbaugruppe OLIC zusammenlaufen. Die kombinierte Vermittlung in zwei Vermittlungsebenen stellt eine besonders wirtschaftliche Lösung dar, die zugleich eine akzeptable Sprachqualität bei guter Ausnutzung der ATM-Bandbreite sichert. Die Erfindung der Mehrebenenvermittlung in einer ATM-Vermittlungseinrichtung und in davon getrennt angeordneten Eingangs- und Ausgangsbaugruppen ILIC und OLIC bringt zwei gegensätzliche Aspekte in Einklang miteinander, nämlich die Verzögerung durch das Umsetzen von niederbitratigen Verbindungen in ATM-Technik zu minimieren und die Ausnutzung der ATM-Bandbreite zu erhöhen. Das Konzept der dezentralen Vermittlung in zwei Ebenen hat den Vorteil, daß die Vermittlungsvorgänge sowohl in den Eingangs- / Ausgangsbaugruppen als auch in der ATM-Vermittlungseinrichtung ASW zumindest gleichartig oder auf ein- und dieselbe Art durchgeführt werden können. Dieses Zweiebenen-Vermittlungsverfahren ist auch anwendbar, wenn die Eingangs- und Ausgangsbaugruppen ILIC und OLIC an externe ATM-Leitungen angeschlossen sind, die die Informationen entweder in TDM-Rahmenstruktur oder als ATM-Minizellen (gemäß AAL 2, ATM Adaption Layer 2 Minizellen) strukturiert übertragen.

Steuereinrichtungen für die Verbindungsbehandlung (call processing) können von den Steuereinrichtungen für die Signalisierungs- bzw. O&M-Aufgaben unterschieden werden. Die Vermittlungsarbeit der ersten Vermittlungsebene und der zweiten Vermittlungsebene wird von der mit der ATM-Vermittlungseinrichtung gekoppelten Steuereinrichtung MP-CP (Main Processor for Call Processing) übernommen. Dies hat den Vorteil, daß wegen des dezentralen Vermittlungsprinzips die Steuereinrichtung MP-CP nur auf den Eingangs- und Ausgangsbaugruppen ILIC und OLIC Einstellungen vorzunehmen braucht, um sowohl die Steuerung der ersten Ebene als auch der zweiten Ebene zu realisieren. Würde man jede der drei vermittelnden Einheiten eigenständig belassen, also entsprechend einem Netzwerk aus Vermittlungsknoten, dann müssten drei Steuereinrichtungen bei jeder Verbindung per Signalisierung ihre Aktionen koordinieren. Durch den einen, die gesamte Steuerungsaufgabe wahrnehmenden Prozessor fällt dies weg. Diese vereinheitlichte Steuerung lässt sich mit geringerem Hardware- und Softwareaufwand verwirklichen und gegebenenfalls an Änderungen einfach und kostenarm anpassen.

Für den Fall der Ausbildung der Netzkomponente als Basisstationssteuerung/Funksteuerung BSC/RNC mit einer Zusatzfunktionalität, die in der Unterstützung einer Datenübertragung gemäß einem Paketdatendienst GPRS (General Packet Radio System) besteht, kann die Anordnung um eine Einrichtung SPU (Signal Processing Unit) ergänzt werden (strichpunktiert dargestellt). Die Einrichtung SPU, die ebenfalls über einen Multiplexer AMX an die Module ASM angeschaltet ist, verfügt über eine Leitungsbaugruppe, die als Ausgangsbaugruppe OLIC ankommende ATM-Zellen in TDM-Verbindungen TDM-O und als Eingangsbaugruppe ILIC eintreffende TDM-Verbindungen TDM-I in ATM-Zellen umsetzt. Darüber hinaus weist die Einrichtung SPU einen digitalen Signalprozessor DSP zur Bearbeitung von TDMorientierten Funktionen - im Rahmen des GPRS-Dienstes - auf der Basis der in den TDM-Verbindungen enthaltenen Informationen auf. Für den Fall, daß der GPRS-Dienst von der Basisstationssteuerung BSC oder Funksteuerung RNC bedient wird, verläuft die Verbindung zunächst von einer Eingangsbaugruppe ILIC (dick markierter Pfeil I) über die ATM-Vermittlungseinrichtung ASW in die Einrichtung SPU (dick markierter Pfeil II) und nach der Signalverarbeitung von der Einrichtung SPU (dick markierter Pfeil II) wieder über die ATM-Vermittlungseinrichtung ASW in die Ausgangsbaugruppe OLIC. Bei Anwendung der Erfindung auf eine Transkodiereinrichtung TRAU als Netzkomponente gilt obiges entsprechend, wobei die Einrichtung SPU nicht optional abhängig von einer Zusatzfunktionalität, sondern immer in den Übertragungsweg eingeschaltet ist. Sie wird dabei als Transcodierbaugruppe zur Durchführung von Transcodierfunktionen betrieben.

Eine Alternative zum zweimaligen Durchlaufen der ATM-Vermittlungseinrichtung ASW für oben genannte Zwecke besteht darin, daß die Einrichtungen ILIC und SPU im Übertragungsweg II durch eine einzige Einrichtung SPU* ersetzbar sind. Diese weist ebenfalls einen digitalen Signalprozessor DSP für TDM-Signalverarbeitung sowie eine Leitungsbaugruppe mit der Funktionalität einer Eingangsbaugruppe ILIC auf, sodaß die Informationen auf den eingangsseitigen TDM-Verbindungen TDM-I sogleich verarbeitet werden können, bevor die Umsetzung in ATM-Zellen und die Vermittlung über die ATM-Vermittlungseinrichtung ASW (dick markierter Pfeil III) zur Ausgangsbaugruppe OLIC folgt.

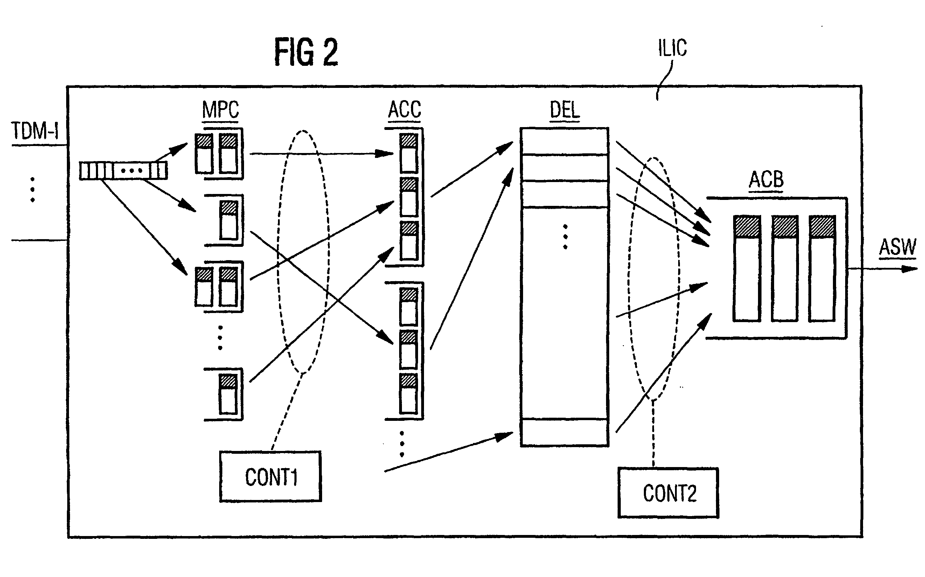

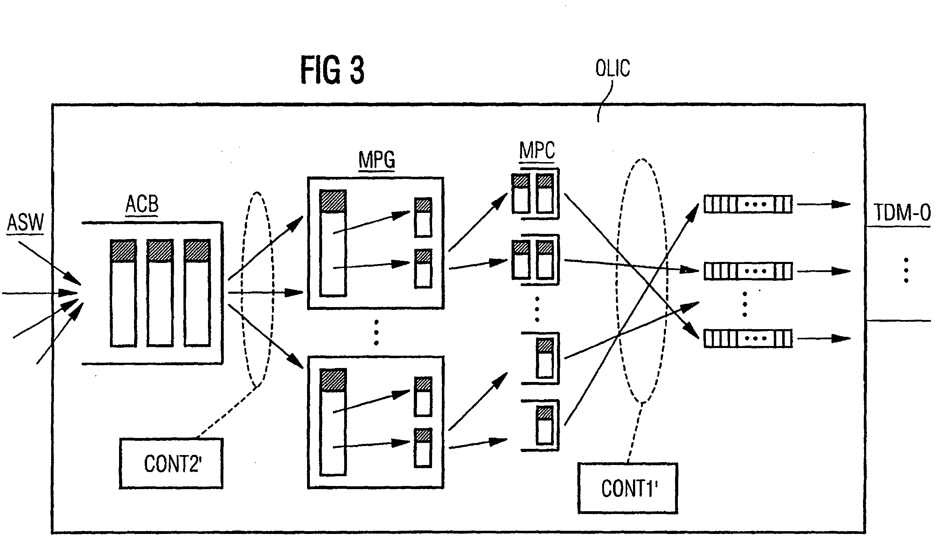

FIG 2 und FIG 3 zeigen Blockschaltbilder einer Eingangsbaugruppe ILIC und einer Ausgangsbaugruppe OLIC zur Vermittlung der Verbindungen in der ersten Vermittlungsebene basierend auf dem Sammeln von Minipaketen in ATM-Zellen. FIG 2 zeigt den Übertragungsweg der Informationen in der Eingangsbaugruppe ILIC von den eingangsseitig ankommenden Verbindungen TDM-I bis zu den ausgangsseitig abgehenden ATM-Zellen, die zu der ATM-Vermittlungseinrichtung weitervermittelt werden. Analog dazu zeigt FIG 3 den Übertragungsweg der Informationen in der Ausgangsbaugruppe OLIC von den eingangsseitig ankommenden ATM-Zellen bis zu den ausgangsseitig abgehenden Verbindungen TDM-O.

Aus dem eintreffenden TDM-Bitstrom werden Minipakete gebildet und in Minipaketsammlern MPC gesammelt, wobei für jede Verbindung - z.B. Nutzverbindung für Sprachübertragung - ein derartiger Minipaketsammler MPC zur Verfügung steht. Minipakete bestehen aus einem Paketkopf und einem Paketrumpf. Der Kopf des Minipaketes enthält mindestens die Verbindungsadresse zur Definition der jeweiligen Verbindung. Zusätzlich können Sicherungsfelder, Angaben über die Länge des Minipaketes, Sequenznummern usw. enthalten sein. Im Rumpf sind die Verbindungsdaten enthalten, die übertragen werden sollen. Der Rumpf der Minipakete wird dadurch gebildet, dass aus jedem eintreffenden TDM-Rahmen diejenigen Zeitschlitze gesammelt werden, die zur jeweiligen Sprachverbindung gehören. Die Länge des Rumpfes beträgt wenige Bytes. Damit ist die Verzögerungszeit so gering wie bei teilgefüllten ATM-Zellen. Da es möglich ist, zugleich mehrere Minipakete in einer ATM-Zelle unterzubringen, hat man den Vorteil einer besseren Nutzung der Transportkapazität der ATM-Zellen. Vorzugsweise kann das Format des Paketkopfes der Minipakete unterschiedlich sein. Entweder handelt es sich um ein proprietäres Format, um mit möglichst wenigen Bits auszukommen, oder um das Format, das im Standard für den AAL 2 festgelegt wurde. Die geringere Anzahl von Bits bei proprietärem Format ist möglich, wenn feste Rumpflänge gewählt wird und auf Prüfsummenbits verzichtet wird, da die erste Vermittlungsebene ohnehin sichert.

Aus den gesammelten Minipaketen können dann ATM-Zellen in ATM-Zellkollektoren ACC zusammengesetzt werden. Welches Minipaket in welchen ATM-Zellkollektor ACC gehört, ist in einer Verbindungstabelle CONT1 festgelegt. Die Einträge und Löschungen in dieser Tabelle nimmt der Steuerprozessor gemäß FIG 1 beim Verbindungsauf- und abbau vor. Er bearbeitet parallel dazu noch die weitere Verbindungstabelle CONT2 auf der Eingangsbaugruppe ILIC, die spiegelbildliche Verbindungstabelle CONT2' auf der Ausgangsbaugruppe OLIC (FIG 3) und deren Verbindungstabelle CONT1'. Durch Bearbeitung der Verbindungstabelle CONT1 bzw. CONT1' wird die erste Vermittlungsebene, durch Bearbeitung der Verbindungstabelle CONT2 bzw. CONT2' die zweite Vermittlungsebene gesteuert. Zur Vermittlung der zweiten Vermittlungsebene legt der Steuerprozessor in der Verbindungstabelle CONT2 der Eingangsbaugruppe ILIC für jeden ATM-Zellkollektor ACC fest, zu welcher Ausgangsbaugruppe OLIC seine ATM-Zellen gelangen sollen. Die Information über die jeweilige Ausgangsbaugruppe OLIC ist im ATM-Zellkopf enthalten. ATM-Zellen verlassen die ATM-Zellkollektoren ACC, wenn mindestens eine von zwei Bedingungen erfüllt ist. Entweder ist die ATM-Zelle voll, oder die maximal zulässige Füllzeit ist erreicht. Die zulässige Füllzeit ist zu beachten, weil Minipakete beim Empfänger innerhalb einer bestimmten Schwankungsbreite der Verzögerung ankommen müssen, zugleich aber nicht gewährleistet ist, dass ausreichend viele Minipaketsammler MPC den ATM-Zellkollektor ACC bedienen, um die ATM-Zelle schnell genug zu füllen.

Nach dem Verlassen des ATM-Zellkollektors ACC durchlaufen die ATM-Zellen eine Verzögerungseinrichtung DEL, im einfachsten Fall als parallele Verzögerungsglieder für die von den ATM-Zellkollektoren ACC abgegebenen ATM-Zellen ausgebildet, mit zufälliger Laufzeit. Dadurch wird vermieden, dass alle ATM-Zellkollektoren ACC der Eingangsbaugruppe ILIC gleichzeitig ihre ATM-Zellen in einen nachgeschalteten ATM-Zellspeicher ACB entleeren, von dem aus der weitere Transport in die ATM-Vermittlungseinrichtung ASW erfolgt. Ein gleichzeitiger Ausstoss von ATM-Zellen droht dann, wenn bei dem Prinzip der TDM-Übertragung alle externen TDM-Leitungen, die an der Eingangsbaugruppe ILIC angeschlossen sind, sowohl bezüglich Takt als auch Phase des TDM-Rahmens synchronisiert sind. Wenn der ATM-Zellspeicher ACB nicht groß genug ist, könnten Zellen verloren gehen oder die maximal zulässige Schwankungsbreite der Verzögerung überschritten werden. Deshalb ist die Verzögerungseinrichtung DEL mit zufälliger Laufzeit zwischen die ATM-Zellkollektoren ACC und dem ATM-Zellspeicher ACB geschaltet.

Auf der Ausgangsbaugruppe OLIC laufen üblicherweise mehrere ATM-Verbindungen von verschiedenen - beispielsweise den beiden in FIG 1 dargestellten - Eingangsbaugruppen ILIC - zusammen, vermittelt von der ATM-Vermittlungseinrichtung ASW. In einem eingangsseitigen ATM-Zellspeicher ACB werden die zugehörigen ATM-Zellen gesammelt. Anhand der Information im ATM-Zellkopf wird ermittelt, von welcher Eingangsbaugruppe ILIC welche ATM-Zellen kommen, und durch die Verbindungstabelle CONT2' die ATM-Zellen auf mehrere Minipaketgeneratoren MPG verteilt. Aus den ATM-Zellen werden in jedem Minipaketgenerator MPG die Minipakete herausgelöst und in nachgeschalteten Minipaketsammlern MPC zwischengespeichert. Von dort aus erfolgt eine Umsetzung der Minipakete in die Verbindungen TDM-O mit TDM-Bitstrom derart, daß der Inhalt der Minipakete auf die jeweilige extern angeschaltete Ausgangsleitung mit dem entsprechenden Zeitschlitz geschaltet wird. Eine Information im Paketkopf der Minizellen liefert den richtigen Zielort. Für die richtige Zuordnung zwischen Minipaketen bzw. Minipaketsammler MPC und Verbindung (Zeitschlitz und Ausgangsleitung) sorgt die Verbindungstabelle CONT1' auf der Ausgangsbaugruppe OLIC.

Es genügt im Prinzip eine einzelne ATM-Verbindung, um alle Minipaketverbindungen von der Eingangsbaugruppe ILIC zu einer bestimmten Ausgangsbaugruppe OLIC zu transportieren, auch wenn eingangsseitige TDM-Verbindungen und ausgangsseitige TDM-Verbindungen örtlich differieren. Um die Minipaket-verbindungen voneinander unterscheiden zu können, wird vorzugsweise ein ausreichend großer Adressraum, der über den Kopf des Minipaketes adressiert werden kann, verwendet. Beim standardisierten AAL 2-Verfahren stehen maximal 248 Minizelladressen zur Verfügung. Sind diese ausgeschöpft, wird zwischen Ein- und Ausgangsbaugruppe eine weitere ATM-Verbindung eingerichtet. Als Alternative dazu kann man auch dank des proprietären Formats den Adressraum sehr viel grösser auslegen, und spart sich den Aufwand für die Einrichtung weiterer ATM-Verbindungen.

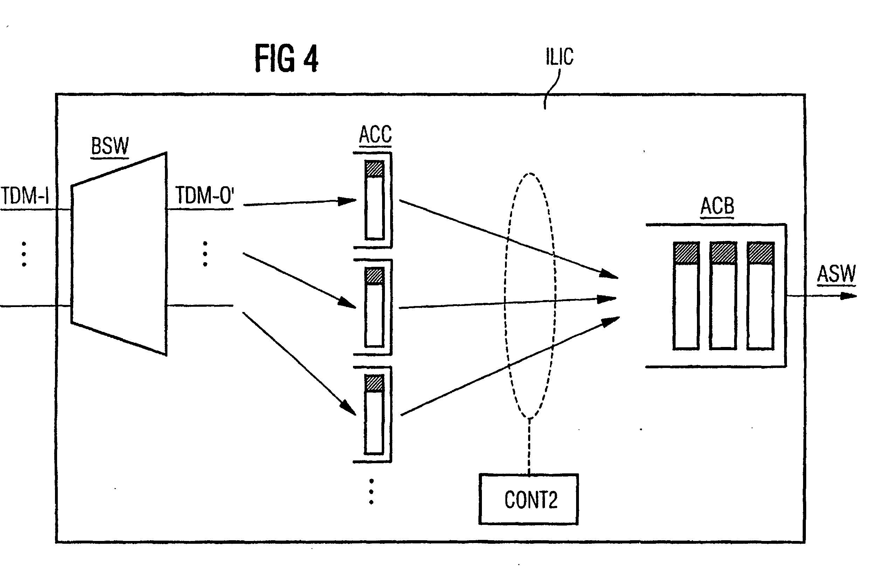

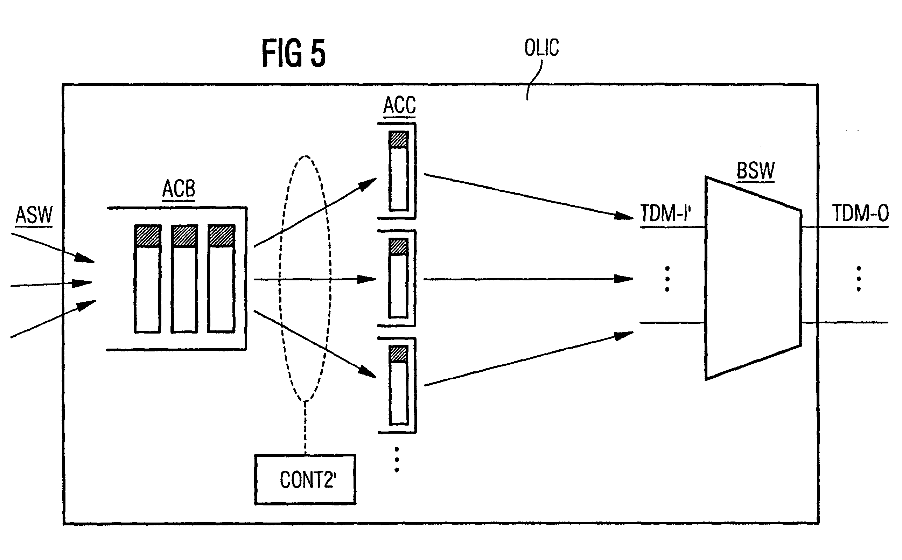

FIG 4 und FIG 5 zeigen Blockschaltbilder einer Eingangsbaugruppe ILIC und einer Ausgangsbaugruppe OLIC zur Vermittlung der Verbindungen in der ersten Vermittlungsebene basierend auf dem Zusammenfassen von TDM-Verbindungen in ATM-Zellen. Während das Verfahren gemäß der FIG 2 und FIG 3 dem Prinzip folgt, TDM-Verbindungen byteweise zu paketieren, werden diese bei dem Beispiel gemäß FIG 4 und FIG 5 bitweise verarbeitet. Dies hat den Vorteil, daß die Verzögerungszeit genauso niedrig wie in herkömmlichen leitungsorientierten (circuit switched) ist. Gleichzeitig ist die Nutzung der verfügbaren Bandbreite mindestens doppelt so hoch wie bei der Vorgehensweise nach FIG 2 und FIG 3, da zur Identifizierung der Schmalbandverbindung kein Minipaketkopf notwendig ist, sondern die Position im TDM-Rahmen hierzu verwendet wird. Die Schmalbandvermittlung auf der Eingangsbaugruppe ILIC wie auf der Ausgangsbaugruppe OLIC nutzt einen Zeit- und Raumlagenwechsel, deren Ergebnis wieder TDM-Rahmen sind. Diese Aufgabe übernimmt ein TDM-Vermittlungselement BSW (Bit Switch), das in der Lage ist, in der Eingangsbaugruppe ILIC eingangsseitig anliegende niederbitratige Verbindungen TDM-I ausgangsseitig auf niederbitratige Verbindungen TDM-O' und in der Ausgangsbaugruppe OLIC eingangsseitig anliegende niederbitratige Verbindungen TDM-I' ausgangsseitig auf niederbitratige Verbindungen TDM-O zu vermitteln.

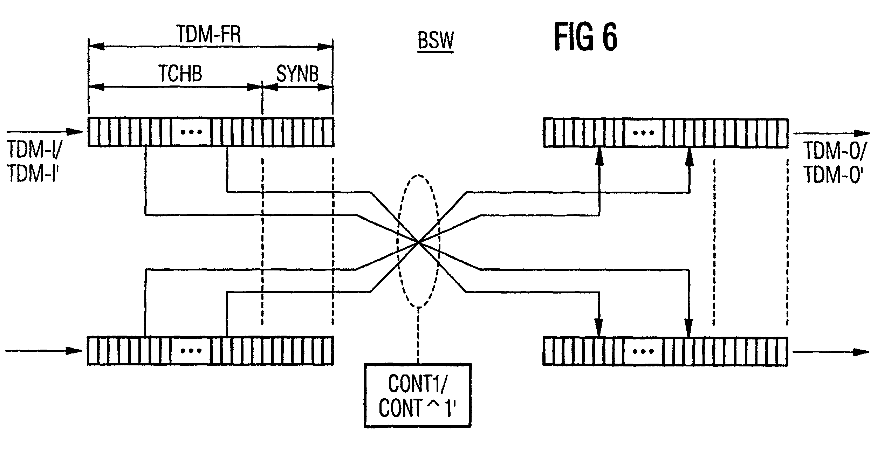

Konkret heisst das gemäß der Darstellung in FIG 6, dass das TDM-Vermittlungselement BSW jedes einzelne Bit eines TDM-Rahmens TDM-FR, aufgeteilt in Verbindungsbits TCHB und Synchronisationsbits SYNB, vermitteln kann. Beispielsweise wird bei der PCM-Übertragung ein 8 kbit/sec-Kanal durch jeweils ein Bit pro PCM-Rahmen repräsentiert (Rahmenzykluszeit 125 µsec). Das TDM-Vermittlungselement BSW ordnet alle TDM-Verbindungen TDM-I bzw. TDM-I' am Eingang, die zur selben Ausgangsbaugruppe gehören, einem oder mehreren gemeinsamen Ausgängen zu, die die TDM-Verbindungen TDM-O' bzw. TDM-O führen. Mehrere gemeinsame Ausgänge sind dann notwendig, wenn mehr TDM-Verbindungen zur selben Ausgangsbaugruppe zu führen sind als ein TDM-Rahmen TDM-FR aufnehmen kann. Beispielsweise vermag ein PCM30-Rahmen maximal 240 Submultiplexverbindungen zu je 8 kbit/sec zu transportieren. Eine Verbindungstabelle CONT1 sorgt für die oben beschriebene Zuordnung der TDM-I Verbindungen auf die TDM-O' Verbindungen, während die Verbindungstabelle CONT1' Zuordnung der TDM-I' Verbindungen auf die TDM-O Verbindungen innerhalb des TDM-Vermittlungselements BSW bewirkt. Gesteuert werden diese Verbindungstabellen CONT1 und CONT1' auch vorzugsweise von der einen Steuereinrichtung (MP-CP in FIG 1).

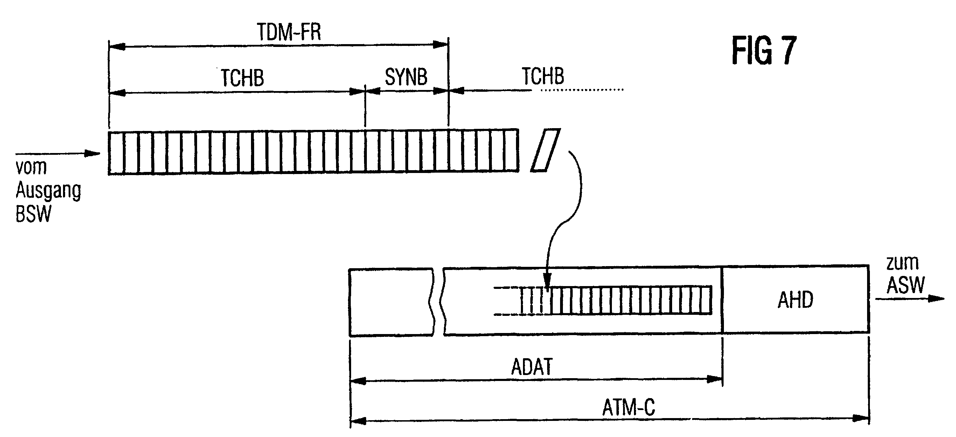

Gemäß FIG 4 werden die von dem TDM-Vermittlungselement BSW bereitgestellten Informationen des Bitstroms in den nachgeschalteten ATM-Zellkollektoren ACC zu ATM-Zellen zusammengefasst, die anschließend - anhand der Verbindungstabelle CONT2 für die Durchschaltung der ATM-Verbindung(en) in der ATM-Vermittlungseinrichtung ASW - in den ATM-Zellspeicher ACB eingeschrieben werden. Der in der Eingangsbaugruppe ILIC nach dem Multiplexen der TDM-Verbindungen durchzuführende zweite Schritt besteht also darin, die von den TDM-Verbindungen geführten Informationen an den Ausgängen des TDM-Vermittlungselements BSW in die ATM-Zellen zu packen. Für diesen zweiten Schritt gibt es alternative Prinzipien, die in den FIG 7 bis FIG 9 dargestellt sind.

Gemäß FIG 5 laufen auf der Ausgangsbaugruppe OLIC wiederum die ATM-Verbindungen von verschiedenen Eingangsbaugruppen ILIC, vermittelt über die ATM-Vermittlungseinrichtung ASW, zusammen. In dem eingangsseitigen ATM-Zellspeicher ACB werden die zugehörigen ATM-Zellen gesammelt. Von dort gelangen die ATM-Zellen in die jeweiligen ATM-Zellkollektoren ACC, wobei die Zuordnung durch die für die Durchschaltung der ATM-Verbindung(en) benutzte Verbindungstabelle CONT2' in der Ausgangsbaugruppe OLIC erfolgt. Anschließend wird ein Depaketieren der ATM-Zellen, die von den ATM-Zellkollektoren ACC kommen, ausgeführt, sodaß parallele Bitströme von Informationen den jeweiligen eingangsseitigen TDM-Verbindungen TDM-I' des TDM-Vermittlungselements BSW zugeführt und entsprechend der Darstellung in FIG 6 zu den ausangsseitigen TDM-Verbindungen TDM-O in der Ausgangsbaugruppe OLIC vermittelt werden.

FIG 7 bis FIG 9 zeigen unterschiedliche Prinzipien zum Füllen der ATM-Zellen mit den Informationen der TDM-Verbindungen. Allen Darstellungen gemeinsam ist, daß vom jeweiligen Ausgang des TDM-Vermittlungselements BSW ein oder mehrere TDM-Rahmen TDM-FR mit den Verbindungsbits TCHB und den Synchronisationsbits SYNB eintreffen und als ATM-Zellen ATM-C in den ATM-Zellspeicher eingetragen und von dort zur ATM-Vermittlungseinrichtung weitergeleitet werden. Jede ATM-Zelle ATM-C verfügt bekanntlich über ein Kopffeld AHD und über ein Datenfeld ADAT.

Bei FIG 7 werden die vom TDM-Ausgang kommenden Bits der Reihe nach in die ATM-Zelle ATM-C eingeschrieben. Sobald die ATM-Zelle ATM-C voll ist, wird sie abgeschickt. Es bleibt also unberücksichtigt, ob ein Bit zu einer TDM-Verbindung für Nutzinformationen oder für Signalisierungsinformationen aus den Verbindungsbits TCHB gehört, oder aus den Synchronisationsbits SYNB des TDM-Rahmens TDM-FR stammt. Deshalb existiert keine Beziehung zwischen der Phase des TDM-Rahmens und der Position der TDM-Informationen in der ATM-Zelle. Bei dieser Methode ist das Packen der TDM-Rahmen in ATM-Zellen einfach und es wird die gesamte verfügbare ATM-Bandbreite genutzt.

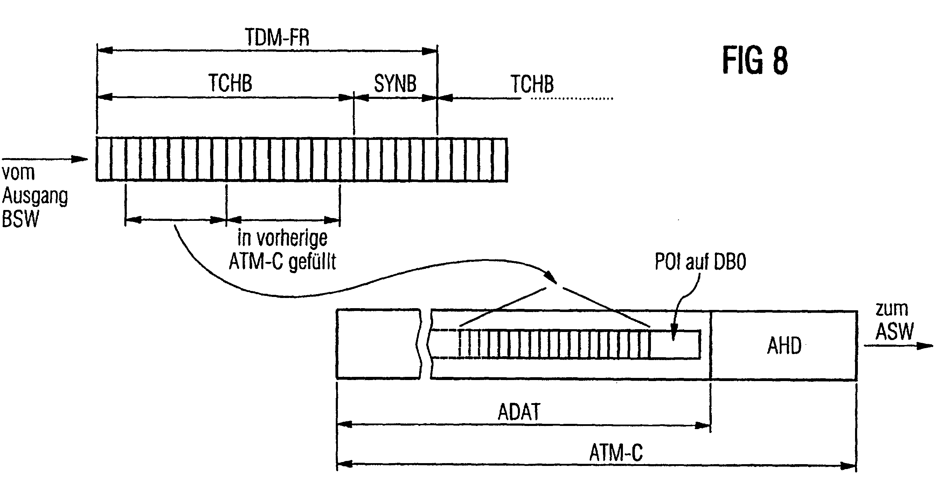

Bei einer dazu alternativen Methode gemäß FIG 8 werden mittels AAL1 (ATM Adaption Layer 1) alle TDM-Zeitschlitze außer dem Synchronisationszeitschlitz in die ATM-Zellen gepackt. Damit die Empfangsseite die Lage der TDM-Zeitschlitze innerhalb der ATM-Zelle erkennen kann, wird in jede achte ATM-Zelle ATM-C zusätzlich ein Zeiger POI eingefügt, der auf den Beginn der TDM-Struktur, erkennbar an dem ersten Informationsbyte DB0, hinweist. Für diesen Fall werden die ATM-Zellen ATM-C als "strukturierte AAL1-Zellen" bezeichnet. Das AAL1-Verfahren sieht vor, die ATM-Zellen periodisch abzuschicken. Die Periode ist dabei so auf die Datenrate des TDM-Ausganges abgestimmt, dass jede ATM-Zelle vollständig gefüllt wird. Damit nutzt diese Methode die verfügbare ATM-Bandbreite vollständig aus und erleichtert die Synchronisation auf der ATM-Empfangsseite.

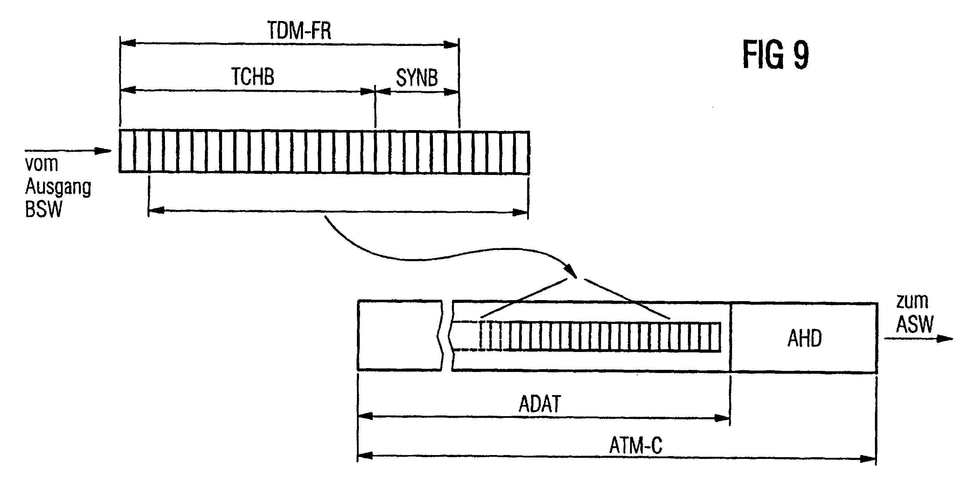

Bei einer weiteren alternativen Methode gemäß FIG 9 weist jede ATM-Zelle ATM-C genau einen TDM-Rahmen TDM-FR auf. Dieser ist in der ATM-Zelle ATM-C so positioniert, dass sein Synchronisationsbyte SYNB immer an derselben Stelle zu finden ist. Auch bei dieser Methode werden die ATM-Zellen periodisch abgeschickt und der Packvorgang beachtet die TDM-Rahmenstruktur. Daher wird die ATM-Bandbreite nicht vollständig ausgenutzt, jedoch ist die TDM-Synchronisation auf der ATM-Empfangsseite gut realisierbar und arbeitet zudem in gleicher Weise für PCM30- und PCM24-Anschlussleitungen als Träger der niederbitratigen TDM-Verbindungen.

## Patentansprüche

1. Verfahren zur Vermittlung von niederbitratigen Verbindungen zwischen Eingangsbaugruppen (ILIC) und Ausgangsbaugruppen (OLIC) einer Netzkomponente (z.B. BSC, RNC, TRAU) eines Kommunikationsnetzes, bei dem
- die Eingangsbaugruppen (ILIC) und die Ausgangsbaugruppen (OLIC) eine erste Vermittlungsebene bilden,
- eine zwischen den Eingangsbaugruppen (ILIC) und den Ausgangsbaugruppen (OLIC) angeordnete ATM-Vermittlungseinrichtung (ASW) eine zweite Vermittlungsebene bildet,
- in der ersten Vermittlungsebene jeweils mehrere an der Eingangsbaugruppe (ILIC) anliegende und zu derselben Ausgangsbaugruppe (OLIC) zu übertragende niederbitratige Verbindungen (TDM-I) von der Eingangsbaugruppe (ILIC) zu mindestens einer ATM-Verbindung zusammengefasst werden,
- in der zweiten Vermittlungsebene die ATM-Verbindung zur Übertragung von Informationen in ATM-Zellen von der ATM-Vermittlungseinrichtung (ASW) durchgeschaltet wird, und
- in der ersten Vermittlungsebene die durchgeschalteten ATM-Verbindungen einer oder mehrerer Eingangsbaugruppen (ILIC) von der Ausgangsbaugruppe (OLIC) in die niederbitratigen Verbindungen (TDM-O) umgesetzt werden,
**dadurch gekennzeichnet , dass**
an die Eingangsbaugruppen (ILIC) und Ausgangsbaugruppen (OLIC) der ersten Vermittlungsebene jeweils externe ATM-Leitungen angeschlossen sind, über die Informationen mehrerer Verbindungen in ATM-Minipaketen strukturiert empfangen und gesendet werden, wobei in den Eingangsbaugruppen (ILIC) der ersten Vermittlungsebene jeweils Minipakete gesammelt und ATM-Zellen aus den gesammelten Minipaketen gebildet werden, wobei anhand einer Verbindungstabelle (CONT1) ausgewählt wird, welche Minipakete in welche ATM-Zellen eingefügt werden.

2. Verfahren nach Anspruch 1, bei dem
die ATM-Zellen eine mit zufälliger Laufzeit arbeitende Verzögerungseinrichtung (DEL) der Eingangsbaugruppe (ILIC) durchlaufen, bevor sie in einem ATM-Zellspeicher (ACB) zwischengespeichert und zur ATM-Vermittlungseinrichtung (ASW) der zweiten Vermittelungsebene gesendet werden.

3. Verfahren nach Anspruch 1 oder 2, bei dem
die Minipakete jeweils einen Paketkopf mit zumindest einer Verbindungsadresse aufweisen, für den ein proprietäres Kopfformat oder ein standardisiertes Kopfformat verwendet wird.

4. Verfahren nach einem der vorhergehenden Ansprüche, bei dem zur Vermittlung der Verbindungen in den Ausgangsbaugruppen (OLIC) der ersten Vermittlungsebene jeweils ATM-Zellen gesammelt und Minipakete aus den ATM-Zellen generiert und zwischengespeichert werden, wobei anhand einer Verbindungstabelle (CONT1') ausgewählt wird, welche Minipakete auf welche Verbindungen der Ausgangsbaugruppe (OLIC) verteilt werden.

5. Verfahren zur Vermittlung von niederbitratigen Verbindungen zwischen Eingangsbaugruppen (ILIC) und Ausgangsbaugruppen (OLIC) einer Netzkomponente (z.B. BSC, RNC, TRAU) eines Kommunikationsnetzes, bei dem
- die Eingangsbaugruppen (ILIC) und die Ausgangsbaugruppen (OLIC) eine erste Vermittlungsebene bilden,
- eine zwischen den Eingangsbaugruppen (ILIC) und den Ausgangsbaugruppen (OLIC) angeordnete ATM-Vermittlungseinrichtung (ASW) eine zweite Vermittlungsebene bildet,
- in der ersten Vermittlungsebene jeweils mehrere an der Eingangsbaugruppe (ILIC) anliegende und zu derselben Ausgangsbaugruppe (OLIC) zu übertragende niederbitratige Verbindungen (TDM-I) von der Eingangsbaugruppe (ILIC) zu mindestens einer ATM-Verbindung zusammenfasst werden,
- in der zweiten Vermittlungsebene die ATM-Verbindung zur Übertragung von Informationen in ATM-Zellen von der ATMvermittlungseinrichtung (ASW) durchgeschaltet wird, und
- in der ersten Vermittlungsebene die durchgeschalteten ATM-Verbindungen einer oder mehrerer Eingangsbaugruppen (ILIC) von der Ausgangsbaugruppe (OLIC) in die niederbitratigen Verbindungen (TDM-O) umgesetzt werden,
**dadurch gekennzeichnet , dass**
an die Eingangsgruppen (ILIC) und Ausgangsbaugruppen (OLIC) der ersten Vermittlungsebene jeweils externe ATM-Leitungen angeschlossen sind, über die Informationen mehrerer Verbindungen in einem Zeitmultiplexrahmen strukturiert empfangen und gesendet werden, wobei in den Eingangsbaugruppen (ILIC) bzw. Ausgangsbaugruppen (OLIC) der ersten Vermittlungsebene jeweils die Verbindungen (TDM-I, TDM-I') durch ein Vermittlungselement (BSW) gemultiplext bzw. demultiplext werden, wobei anhand einer Verbindungstabelle (CONT1, CONT1') eine Zuordnung der Verbindungen zu den Ausgängen erfolgt.

6. Verfahren nach Anspruch 5, bei dem
in den Eingangsbaugruppen (ILIC) ATM-Zellen aus den an den gemeinsamen Ausgängen gemultiplexten Informationen gebildet und gesammelt werden, bevor sie in einem ATM-Zellspeicher (ACB) zwischengespeichert und zur ATM-Vermittlungseinrichtung (ASW) der zweiten Vermittlungsebene gesendet werden.

7. Verfahren nach Anspruch 5 oder 6, bei dem
in den Ausgangsbaugruppen (OLIC) der ersten Vermittlungsebene ankommende ATM-Zellen in einem ATM-Zellspeicher (ACB) zwischengespeichert und anschließend gesammelt werden, bevor sie dem Vermittlungselement (BSW) zugeführt werden.

8. Verfahren nach einem der vorhergehenden Ansprüche, bei dem anhand einer weiteren Verbindungstabelle (CONT2) auf der Eingangsbaugruppe (ILIC) ausgewählt wird, welche ATM-Zellen zu welcher Ausgangsbaugruppe (OLIC) von der ATM-Vermittlungseinrichtung (ASW) der zweiten Vermittlungsebene durchgeschaltet werden.

9. Verfahren nach einem der vorhergehenden Ansprüche, bei dem anhand einer weiteren Verbindungstabelle (CONT2') auf der Ausgangsbaugruppe (OLIC) ausgewählt wird, welche ATM-Zellen zu welchem ATM-Zellkollektor (ACC) oder zu welchem Minipaketgenerator (MPG) verteilt werden.

10. Verfahren nach einem der Ansprüche 6 bis 9, bei dem die ATM-Zellen (ATM-C) derart gefüllt werden, dass die an einem gemeinsamen Ausgang eintreffenden Informationen unabhängig davon, ob es sich um Nutzinformationen oder Signalisierungsinformationen handelt, der Reihe nach aufeinanderfolgend in die ATM-Zelle (ATM-C) eingetragen werden.

11. Verfahren nach einem der Ansprüche 6 bis 9, bei dem
die ATM-Zellen (ATM-C) als strukturierte ATM-Zellen mit den an einem gemeinsamen Ausgang eintreffenden Informationen gefüllt werden, die einen Zeiger (POI) zur Kennzeichnung des Anfangs der Struktur enthält.

12. Verfahren nach einem der Ansprüche 6 bis 9, bei dem
die ATM-Zellen (ATM-C) teilweise mit den an einem gemeinsamen Ausgang eintreffenden Informationen gefüllt werden und jeweils an derselben Stelle befindliche Synchronisationsinformationen enthalten.

13. Verfahren nach einem der vorhergehenden Ansprüche, bei dem eine gemeinsame Steuereinrichtung (MP-CP) zur Steuerung der Funktionen in der ersten und zweiten Vermittlungsebene verwendet wird.

14. Verfahren nach einem der vorhergehenden Ansprüche, bei dem die ATM-Vermittlungseinrichtung (ASW) nach Art eines dezentralen Vermittlungsprinzips betrieben wird, deren Steuereinrichtung (MP-CP) Einstellungen in den Eingangsbaugruppen (ILIC) und den Ausgangsbaugruppen (OLIC) der ersten Vermittlungsebene veranlasst.

15. Netzkomponente (z.B. BSC, RNC, TRAU) zur Vermittlung von niederbitratigen Verbindungen zwischen Eingangsbaugruppen (ILIC) und Ausgangsbaugruppen (OLIC) einer Netzkomponente (z.B. BSC, RNC, TRAU) eines Kommunikationsnetzes, mit
- einer von den Eingangsbaugruppen (ILIC) und den Ausgangsbaugruppen (OLIC) gebildeten ersten Vermittlungsebene,
- Einrichtungen in der Eingangsbaugruppe (ILIC) der ersten Vermittlungsebene für jeweils eine Zusammenfassung mehrerer an der Eingangsbaugruppe (ILIC) anliegender und zu derselben Ausgangsbaugruppe (OLIC) zu übertragender niederbitratiger Verbindungen (TDM-I) zu mindestens einer ATM-Verbindung,
- einer von einer zwischen den Eingangsbaugruppen (ILIC) und den Ausgangsbaugruppen (OLIC) angeordneten ATM-Vermittlungseinrichtung (ASW) gebildeten zweiten Vermittlungsebene zur Durchschaltung der ATM-Verbindungen zur Übertragung von Tnformationen in ATM-Zellen, und
- Einrichtungen in der Ausgangsbaugruppe (OLIC) der ersten Vermittlungsebene zur Umsetzung der an die Ausgangsbaugruppe (OLIC) durchgeschalteten ATM-Verbindungen einer oder mehrerer Eingangsbaugruppen (ILIC) in die niederbitratigen Verbindungen (TDM-O),
**dadurch gekennzeichnet , dass**
an die Eingangsbaugruppen (ILIC) und Ausgangsbaugruppen (OLIC) der ersten Vermittlungsebene jeweils externe ATM-Leitungen zum strukturierten Senden und Empfangen von Informationen mehrerer Verbindungen in einem Zeitmultiplexrahmen angeschlossen sind, wobei in den Eingangsbaugruppen (ILIC) bzw. Ausgangsbaugruppen (OLIC) der ersten Vermittlungsebene jeweils die Verbindungen (TDM-I, TDM-I') durch ein Vermittlungselement (BSW) gemultiplext bzw. demultiplext werden können, wobei anhand einer Verbindungstabelle (CONT1, CONT1') eine Zuordnung der Verbindungen zu den Ausgängen vornehmbar ist.

16. Netzkomponente (z.B. BSC, RNC, TRAU) zur Vermittlung von niederbitratigen Verbindungen zwischen Eingangsbaugruppen (ILIC) und Ausgangsbaugruppen (OLIC) einer Netzkomponente (z.B. BSC, RNC, TRAU) eines Kommunikationsnetzes, mit
- einer von den Eingangsbaugruppen (ILIC) und den Ausgangsbaugruppen (OLIC) gebildeten ersten Vermittlungsebene,
- Einrichtungen in den Eingangsbaugruppe (ILIC) der ersten Vermittlungsebene für jeweils eine Zusammenfassung mehrerer an der Eingangsbaugruppe (ILIC) anliegender und zu derselben Ausgangsbaugruppe (OLIC) zu übertragender niederbitratiger Verbindungen (TDM-I) zu mindestens einer ATM-Verbindung,
- einer von einer zwischen den Eingangsbaugruppen (ILIC) und den Ausgangsbaugruppen (OLIC) angeordneten ATM-Vermittlungseinrichtung (ASW) gebildeten zweiten Vermittlungsebene zur Durchschaltung der ATM-Verbindungen zur Übertragung von Informationen in ATM-Zellen, und
- Einrichtungen in der Ausgangsbaugruppe (OLIC) der ersten Vermittlungsebene zur Umsetzung der an die Ausgangsbaugruppe (OLIC) durchgeschalteten ATM-Verbindungen einer oder mehrerer Eingangsbaugruppen (ILIC) in die niederbitratigen Verbindungen (TDM-O),
**dadurch gekennzeichnet , dass**
an die Eingangsbaugruppen (ILIC) und Ausgangsbaugruppen (OLIC) der ersten Vermittlungsebene jeweils externe ATM-Leitungen zum strukturierten Senden und Empfangen von Informationen mehrerer Verbindungen in ATM-Minipaketen angeschlossen sind, wobei in den Eingangsbaugruppen (ILIC) der ersten Vermittlungsebene jeweils Minipakete gesammelt und ATM-Zellen aus den gesammelten Minipaketen gebildet werden können, wobei anhand einer Verbindungstabelle (CONT1) auswählbar ist, welche Minipakete in welche ATM-Zelle eingefügt werden.

17. Netzkomponente nach Anspruch 15 oder 16, zur Durchführung einer mobilfunkspezifischen Funktion.

18. Netzkomponente nach Anspruch 15, 16 oder 17, ausgebildet als Basisstationssteuereinrichtung (z.B. BSC) oder als Funksteuerung (z.B. RNC) zur Kontrolle von Basisstationen eines Mobilfunknetzes.

19. Netzkomponente nach Anspruch 15, 16 oder 17, ausgebildet als Transkodiereinrichtung (z.B. TRAU) eines Mobilfunknetzes.

20. Netzkomponente nach Anspruch 15 oder 16, zur Durchführung einer festnetzspezifischen Funktion.

## Claims

1. Method for switching low bit rate connections between input assemblies (ILIC) and output assemblies (OLIC) of a network component (for example BSC, RNC, TRAU) of a communication network, in which
- the input assemblies (ILIC) and the output assemblies (OLIC) form a first switching level,
- an ATM switching device (ILIC) which is arranged between the input assemblies (OLIC) and the output assemblies (ASW) forms a second switching level
- in the first switching level, two or more low bit rate connections (TDM-I) which are connected to the input assembly (ILIC) and are to be transmitted to the same output assembly (OLIC) are in each case combined by the input assembly (ILIC) to form at least one ATM connection,
- in the second switching level, the ATM connection is switched through by the ATM switching device (ASW) in order to transmit information in ATM cells, and
- in the first switching level, the switched-through ATM connections of one or more input assemblies (ILIC) are converted by the output assembly (OLIC) to the low bit rate connections (TDM-O)
**characterized**
**in that** external ATM lines are in each case connected to the input assemblies (ILIC) and output assemblies (OLIC) in the first switching level, via which external ATM lines the information of a plurality of connections is received and transmitted in structured form in ATM minipackets, minipackets being in each case collected and ATM cells are formed from the collected minipackets in the input assemblies (ILIC) in the first switching level, in which case a connection table (CONT1) is used to select which minipackets are inserted into which ATM cell.

2. Method according to Claim 1, in which
the ATM cells pass through a delay device (DEL), which operates with a random delay time, of the input assembly (ILIC), before they are buffer stored in an ATM cell memory (ACB) and are sent to the ATM switching device (ASW) in the second switching level.

3. Method according to Claim 1 or 2, in which the minipackets each have a packet header having at least one connection address, for which a proprietary header format or a standardized. header format is used.

4. Method according to one of the preceding claims, in which, in order to switch the connections in the output assemblies (OLIC) in the first switching level, ATM cells are in each case collected and minipackets are generated from the ATM cells and are buffer stored, in which case a connection table (CONT1') is used to select which minipackets are distributed to which connections of the output assembly (OLIC).

5. Method for switching low bit rate connections between input assemblies (ILIC) and output assemblies (OLIC) of a network component (for example BSC,
RNC, TRAU) of a communications network, in which
- the input assemblies (ILIC) and the output assemblies (OLIC) form a first switching level,
- an ATM switching device (ASW) which is arranged between the input assemblies (ILIC) and the output assemblies (OLIC) forms a second switching level,
- in the first switching level, two or more low bit rate connections (TDM-I) which are connected to the input assembly (ILIC) and are to be transmitted to the same output assembly (OLIC) are combined by the input assembly (ILIC) to form at least one ATM connection,
- in the second switching level, the ATM connection is switched through by the ATM switching device (ASW) in order to transmit information in ATM cells, and
- in the first switching level, the switched-through ATM connections of one or more input assemblies (ILIC) are converted by the output assembly (OLIC) to the low bit rate connections (TDM-O),
**characterized in that**
the input groups (ILIC) and output assemblies (OLIC) in the first switching level are each connected to external ATM lines via which information. for two or more connections is received and transmitted structured in a time-division multiplex frame, with the connections (TDM-I, TDM-I') in the input assemblies (ILIC) and output assemblies (OLIC) in the first switching level being respectively multiplexed and demultiplexed by a switching element (BSW), in which case the connections are assigned to the outputs using a connection table (CONT1, CONT1').

6. Method according to Claim 5, in which
the ATM cells are formed and collected in the input assemblies (ILIC) from the information multiplexed at the common outputs, before this information is buffer stored in an ATM cell memory (ACB) and is sent to the ATM switching device (ASW) in the second switching level.

7. Method according to Claim 5 or 6, in which
in which ATM cells. are buffer stored in an ATM cell memory (ACB) in the output assemblies (OLIC) in the first switching level, and are then collected before they are supplied to the switching element (BSW).

8. Method according to one of the preceding claims, in which a further connection table (CONT2) on the input assembly (ILIC) is used to select which ATM cells are switched through to which output assembly (OLIC) by the ATM switching device (ASW) in the second switching level.

9. Method according to one of the preceding claims, in which a further connection table (CONT2') on the output assembly (OLIC) is used to select which ATM cells are distributed to which ATM cell collector (ACC) or to which minipacket generator (MPG).

10. Method according to one of Claims 6 to 9, in which
the ATM cells (ATM-C) are filled in such a manner that the information which arrives at a common output is entered in the ATM cell (ATM-C) serially and successively irrespective of whether this is wanted information or signalling information.

11. Method according to one of Claims 6 to 9, in which
the ATM cells (ATM-C) are filled, as structured ATM cells, with the information which arrives at a common output and includes a pointer (POI) to identify the start of the structure.

12. Method according to one of Claims 6 to 9, in which some of the ATM cells (ATM-C) are filled with the information which arrives at a common output, and each contain synchronization information located at the same point.

13. Method according to one of the preceding claims, in which a common control device (MC-CP) is used to control the functions in the first and second switching levels.

14. Method according to one of the preceding claims, in which the ATM switching device (ASW) is operated in the manner of a decentralized switching principle, whose control device (MP-CP) initiates settings in the input assemblies (ILIC) and the output assemblies (OLIC) in the first switching level.

15. Network component (for example BSC, RNC, TRAU) for switching low bit rate connections between input assemblies (ILIC) and output assemblies (OLIC) of a network component (for example, BSC, RNC, TRAU) in a communication network, having
- a first switching level which is formed by the input assemblies (ILIC) and the output assemblies (OLIC),
- devices in the input assembly (ILIC) in the first switching level for in each case one combination of a plurality of low bit rate connections (TDM-I) which are applied to the input assembly (ILIC) and are to be transmitted to the same output assembly (OLIC), to form at lease one ATM connection,
- a second switching level, which is formed by an TM switching device (ASW) arranged between the input assemblies (ILIC) and the output assemblies (OLIC), for switching through the ATM connections in order to transmit information in ATM cells, and
- devices in the output assembly (OLIC) in the first switching level, for converting the ATM connections of one or more input assemblies (ILIC), which are switched through to the output assembly (OLIC), into the low bit rate connections (TDM-O),
**characterized**
**in that** external ATM lines are in each case connected to the input assemblies (ILIC) and output assemblies (OLIC) in the first switching level, for structured transmission and reception of information in a plurality of connections in a time-division multiplex frame, in which the connections (TDM-I, TDM-I') can respectively be multiplexed or demultiplexed in the input assemblies (ILIC) and output assemblies (OLIC) in the first switching level, and in which the connections can be associated with the outputs on the basis of a connection table (CONT1, CONT1').

16. Network component (for example BSC, RNC, TRAU) for switching low bit rate connections between input assemblies (ILIC) and output assemblies (OLIC) of a network component (for example BSC, RNC, TRAU) in a communication network, having
- a first switching level which is formed by the input assemblies (ILIC) and by the output assemblies (OLIC),
- devices in the input assembly (ILIC) in the first switching level for combining in each case two or more low bit rate connections (TDM-I), which are connected to the input assembly (ILIC) and are to be transmitted to the same output assembly (OLIC), to form at least one ATM connection,
- a second switching level, which is formed by an ATM switching device (ASW) which is arranged between the input assemblies (ILIC) and the output assemblies (OLIC), for switching through the ATM connections for transmitting information in ATM cells, and
- devices in the output assembly (OLIC) in the first switching level for converting the ATM connections which are switched through to the output assembly (OLIC) from one or more input assemblies (ILIC) to low bit rate connections (TDM-O),
**characterized in that**
external ATM lines for structured transmission and reception of information for two or more connections in ATM minipackets are respectively connected to the input assemblies (ILIC) and output assemblies (OLIC) in the first switching level, in which case minipackets can be collected in each of the input assemblies (ILIC) in the first switching level and ATM cells can be formed from the collected minipackets, and in which case a connection table (CONT1) can be used to select which minipackets are inserted into which ATM cell.

17. Network component according to Claim 15 or 16, for carrying out a function which is specific to mobile radios.

18. Network component according to one of Claims 15, 16 or 17, designed as a base station control device (for example BSC), or as a radio controller (for example RNC) in order to monitor base stations in a mobile radio network.

19. Network component according to one of Claims 15, 16 or 17, designed as a transcoder for the transcoder device (for example TRAU) of a mobile radio network.

20. Network component according to Claims 15 or 16, for carrying out a function which is specific to fixed networks.

## Revendications

1. Procédé pour la commutation de liaisons à faible débit binaire entre des modules d'entrée (ILIC) et des modules de sortie (OLIC) d'un composant de réseau (par exemple BSC, RNC, TRAU) d'un réseau de communication, dans lequel
- les modules d'entrée (ILIC) et les modules de sortie (OLIC) forment un premier niveau de commutation,
- un dispositif de commutation ATM (ASW) placé entre les modules d'entrée (ILIC) et les modules de sortie (OLIC) forme un deuxième niveau de commutation,
- dans le premier niveau de commutation, plusieurs liaisons à faible débit binaire (TDM-I), appliquées au module d'entrée (ILIC) et à transmettre au même module de sortie (CLIC), sont regroupées à chaque fois par le module d'entrée (ILIC) en au moins une liaison ATM,
- dans le deuxième niveau de commutation, la liaison ATM est interconnectée par le dispositif de commutation ATM (ASW) pour la transmission d'informations dans des cellules ATM, et
- dans le premier niveau de commutation, les liaisons ATM interconnectées d'un ou plusieurs modules d'entrée (ILIC) sont converties par le module de sortie (OLIC) en liaisons à faible débit binaire (TDM-O),
**caractérisé par le fait qu'**il est raccordé aux modules d'entrée (ILIC) et aux modules de sortie (OLIC) du premier niveau de commutation à chaque fois des lignes ATM externes par l'intermédiaire desquelles des informations de plusieurs liaisons sont reçues et envoyées structurées en mini-paquets ATM, à chaque fois des mini-paquets étant rassemblés dans les modules d'entrée (ILIC) du premier niveau de commutation et des cellules ATM étant formées à partir des mini-paquets rassemblés, une sélection étant faite à l'aide d'un tableau de liaisons (CONT1) pour indiquer quels mini-paquets sont insérés dans quelles cellules ATM.

2. Procédé selon la revendication 1, dans lequel les cellules ATM traversent un dispositif de retardement (DEL), travaillant avec un temps de propagation aléatoire, du module d'entrée (ILIC) avant d'être mémorisées temporairement dans une mémoire de cellules ATM (ACB) et d'être envoyées au dispositif de commutation ATM (ASW) du deuxième niveau de commutation.

3. Procédé selon la revendication 1 ou 2, dans lequel les mini-paquets comportent chacun un en-tête qui contient au moins une adresse de liaison et pour lequel on utilise un format d'en-tête propriétaire ou un format d'en-tête standardisé.

4. Procédé selon l'une des revendications précédentes, dans lequel, pour la commutation des liaisons dans les modules de sortie (OLIC) du premier niveau de commutation, on rassemble à chaque fois des cellules ATM, on produit des mini-paquets à partir des cellules ATM et on les mémorise temporairement, une sélection étant faite à l'aide d'un tableau de liaisons (CONT1') pour indiquer quels mini-paquets sont distribués sur quelles liaisons du module de sortie (OLIC).

5. Procédé pour la commutation de liaisons à faible débit binaire entre des modules d'entrée (ILIC) et des modules de sortie (OLIC) d'un composant de réseau (par exemple BSC, RNC, TRAU) d'un réseau de communication, dans lequel
- les modules d'entrée (ILIC) et les modules de sortie (OLIC) forment un premier niveau de commutation,
- un dispositif de commutation ATM (ASW) placé entre les modules d'entrée (ILIC) et les modules de sortie (OLIC) forme un deuxième niveau de commutation,
- dans le premier niveau de commutation, plusieurs liaisons à faible débit binaire (TDM-I), appliquées au module d'entrée (ILIC) et à transmettre au même module de sortie (OLIC), sont regroupées à chaque fois par le module d'entrée (ILIC) en au moins une liaison ATM,
- dans le deuxième niveau de commutation, la liaison ATM est interconnectée par le dispositif de commutation ATM (ASW) pour la transmission d'informations dans des cellules ATM, et
- dans le premier niveau de commutation, les liaisons ATM interconnectées d'un ou plusieurs modules d'entrée (ILIC) sont converties par le module de sortie (OLIC) en liaisons à faible débit binaire (TDM-O),
**caractérisé par le fait qu'**il est raccordé aux modules d'entrée (ILIC) et aux modules de sortie (OLIC) du premier niveau de commutation à chaque fois des lignes ATM externes par l'intermédiaire desquelles des informations de plusieurs liaisons sont reçues et envoyées structurées dans une trame de multiplexage temporel, à chaque fois les liaisons (TDM-I, TDM-I') étant multiplexées respectivement démultiplexées par un élément de commutation (BSW) dans les modules d'entrée (ILIC) respectivement dans les modules de sortie (OLIC) du premier niveau de commutation, une association des liaisons aux sorties s'effectuant à l'aide d'un tableau de liaisons (CONT1, CONT1').

6. Procédé selon la revendication 5, dans lequel, dans les modules d'entrée (ILIC), des cellules ATM sont formées à partir des informations multiplexées aux sorties communes et sont rassemblées avant d'être mémorisées temporairement dans une mémoire de cellules ATM (ACB) et d'être envoyées au dispositif de commutation ATM (ASW) du deuxième niveau de commutation.

7. Procédé selon la revendication 5 ou 6, dans lequel, dans les modules de sortie (OLIC) du premier niveau de commutation, des cellules ATM arrivantes sont mémorisées temporairement dans une mémoire de cellules ATM (ACB) et sont ensuite rassemblées avant d'être envoyées à l'élément de commutation (BSW).

8. Procédé selon l'une des revendications précédentes, dans lequel, à l'aide d'un autre tableau de liaisons (CONT2) sur le module d'entrée (ILIC), on sélectionne quelles cellules ATM sont interconnectées vers quel module de sortie (OLIC) par le dispositif de commutation ATM (ASW) du deuxième niveau de commutation.

9. Procédé selon l'une des revendications précédentes, dans lequel, à l'aide d'un autre tableau de liaisons (CONT2') sur le module de sortie (OLIC), on sélectionne quelles cellules ATM sont distribuées à quel collecteur de cellules ATM (ACC) ou à quel générateur de mini-paquets (MPG).

10. Procédé selon l'une des revendications 6 à 9, dans lequel on remplit les cellules ATM (ATM-C) de telle sorte que les informations entrant à une sortie commune sont enregistrées successivement et dans l'ordre dans la cellule ATM (ATM-C), qu'il s'agisse d'informations utiles ou d'informations de signalisation.

11. Procédé selon l'une des revendications 6 à 9, dans lequel on remplit les cellules ATM (ATM-C) sous forme de cellules ATM structurées avec les informations entrant à une sortie commune, une cellule contenant un pointeur (POI) pour caractériser le début de la structure.

12. Procédé selon l'une des revendications 6 à 9, dans lequel les cellules ATM (ATM-C) sont remplies partiellement avec les informations entrant à une sortie commune et contiennent des informations de synchronisation situées à chaque fois à la même place.

13. Procédé selon l'une des revendications précédentes, dans lequel on utilise un dispositif de commande commun (MP-CP) pour commander les fonctions dans le premier et dans le deuxième niveau de commutation.

14. Procédé selon l'une des revendications précédentes, dans lequel le dispositif de commutation ATM (ASW) fonctionne suivant un principe de commutation décentralisée, le dispositif de commande (MP-CP) effectuant des réglages dans les modules d'entrée (ILIC) et dans les modules de sortie (OLIC) du premier niveau de commutation.

15. Composant de réseau (par exemple BSC, RNC, TRAU) pour la commutation de liaisons à faible débit binaire entre des modules d'entrée (ILIC) et des modules de sortie (OLIC) d'un composant de réseau (par exemple BSC, RNC, TRAU) d'un réseau de communication, comportant
- un premier niveau de commutation formé des modules d'entrée (ILIC) et des modules de sortie (OLIC),
- des dispositifs dans le module d'entrée (ILIC) du premier niveau de commutation pour à chaque fois un rassemblement de plusieurs liaisons à faible débit binaire (TDM-I), appliquées au module d'entrée (ILIC) et à transmettre au même module de sortie (OLIC), en au moins une liaison ATM,
- un deuxième niveau de commutation qui est formé par un dispositif de commutation ATM (ASW) placé entre les modules d'entrée (ILIC) et les modules de sortie (OLIC) et qui est destiné à l'interconnexion des liaisons ATM pour la transmission d'informations en cellules ATM, et
- des dispositifs dans le module de sortie (OLIC) du premier niveau de commutation pour la conversion des liaisons ATM, interconnectées sur le module de sortie (OLIC), d'un ou plusieurs modules d'entrée (ILIC) en liaisons à faible débit binaire (TDM-O),
**caractérisé par le fait qu'**il est raccordé aux modules d'entrée (ILIC) et aux modules de sortie (OLIC) du premier niveau de commutation à chaque fois des lignes ATM externes pour l'émission et la réception structurée de plusieurs liaisons dans une trame de multiplexage temporel, à chaque fois les liaisons (TDM-I, TDM-I') étant multiplexées respectivement démultiplexées par un élément de commutation (BSW) dans les modules d'entrée (ILIC) respectivement dans les modules de sortie (OLIC) du premier niveau de commutation, une association des liaisons aux sorties pouvant s'effectuer à l'aide d'un tableau de liaisons (CONT1, CONT1').

16. Composant de réseau (par exemple BSC, RNC, TRAU) pour la commutation de liaisons à faible débit binaire entre des modules d'entrée (ILIC) et des modules de sortie (OLIC) d'un composant de réseau (par exemple BSC, RNC, TRAU) d'un réseau de communication, comportant
- un premier niveau de commutation formé des modules d'entrée (ILIC) et des modules de sortie (OLIC),
- des dispositifs dans le module d'entrée (ILIC) du premier niveau de commutation pour à chaque fois un rassemblement de plusieurs liaisons à faible débit binaire (TDM-I), appliquées au module d'entrée (ILIC) et à transmettre au même module de sortie (OLIC), en au moins une liaison ATM,
- un deuxième niveau de commutation qui est formé par un dispositif de commutation ATM (ASW) placé entre les modules d'entrée (ILIC) et les modules de sortie (OLIC) et qui est destiné à l'interconnexion des liaisons ATM pour la transmission d'informations en cellules ATM, et
- des dispositifs dans le module de sortie (OLIC) du premier niveau de commutation pour la conversion des liaisons ATM, interconnectées sur le module de sortie (OLIC), d'un ou plusieurs modules d'entrée (ILIC) en liaisons à faible débit binaire (TDM-O),
**caractérisé par le fait qu'**il est raccordé aux modules d'entrée (ILIC) et aux modules de sortie (OLIC) du premier niveau de commutation à chaque fois des lignes ATM externes pour l'émission et la réception structurée d'informations de plusieurs liaisons en mini-paquets ATM, à chaque fois des mini-paquets pouvant être rassemblés dans les modules d'entrée (ILIC) du premier niveau de commutation et des cellules ATM pouvant être formées à partir des mini-paquets rassemblés, une sélection pouvant être faite à l'aide d'un tableau de liaisons (CONT1) pour indiquer quels mini-paquets sont insérés dans quelle cellule ATM.

17. Composant de réseau selon la revendication 15 ou 16, pour la mise en oeuvre d'une fonction spécifique à la radiocommunication mobile.

18. Composant de réseau selon la revendication 15, 16 ou 17, conçu comme dispositif de commande de station de base (par exemple BSC) ou comme commande radio (par exemple RNC) pour le contrôle de stations de base d'un réseau de radiocommunication mobile.

19. Composant de réseau selon la revendication 15, 16 ou 17, conçu comme dispositif de transcodage (par exemple TRAU) d'un réseau de radiocommunication mobile.

20. Composant de réseau selon la revendication 15 ou 16, pour la mise en oeuvre d'une fonction spécifique au réseau de service fixe.
